# EUROPEAN PATENT APPLICATION

(11) **EP 4 545 221 A1**
(43) Date of publication of application: **30.04.2025**
(21) Application number: 23205536.8
(22) Date of filing: 24.10.2023
(51) Int. Cl.: B22F 10/31, B22F 10/28, B22F 12/17, B22F 12/30, B22F 12/80, B22F 12/90, B33Y 30/00, B33Y 10/00, B22F 12/70

(54) **METHOD OF CALIBRATING A MANUFACTURING DEVICE FOR ADDITIVELY MANUFACTURING A THREE-DIMENSIONAL OBJECT, AND MANUFACTURING DEVICE**

(71) Applicant: TRUMPF Additive Manufacturing Italia S.r.l., 36015 Schio (VI) (IT)
(72) Inventor: Michieli, Niccolò, 36015 Schio (IT); Mantoan, Elia, 36036 Torrebelvicino (IT)
(74) Representative: Trumpf Patentabteilung

(57) **Abstract**

A method of calibrating a manufacturing device (1) for additively manufacturing a three-dimensional object (10; 10a, 10b) by applying layers of a building material (7), preferably a powder, and selectively solidifying the building material (7) with at least one laser beam (6; 6a, 6b), wherein the manufacturing device (1) comprises at least one laser beam generating unit (2; 2a, 2b) for directing the at least one laser beam (6a, 6b) on the building material (7), a build chamber (5), which comprises an opening (11) in the lower surface and is configured to keep an inert atmosphere at least while the manufacturing device (1) is manufacturing the three-dimensional object (10; 10a, 10b), a build cylinder (12; 12a, 12b, 12c, 12d), which is configured to be arranged underneath the build chamber (5) and linked to the build chamber (5) by positioning it at the opening (11) of the build chamber (5), wherein the build cylinder (12; 12a, 12b, 12c, 12d) comprises a vertically movable substrate plate (13), and a measurement cylinder (14; 14a, 14b), which is configured to be arranged underneath the build chamber (5) and linked to the build chamber (5) by positioning it at the opening (11) of the build chamber (5), wherein the method comprises the steps of placing the build cylinder (12; 12a, 12b, 12c, 12d) or the measurement cylinder (14; 14a, 14b) at the opening (11) of the build chamber (5), building a three-dimensional object (10; 10a, 10b) inside the build cylinder (12; 12a, 12b, 12c, 12d) and calibrating the manufacturing device (1) with the measurement cylinder (14; 14a, 14b) containing a measurement device (15; 15a, 15b) before and/or after building the three-dimensional object (10; 10a, 10b).

## Description

### Technical Field

The present disclosure generally relates to a method of calibrating a manufacturing device for additively manufacturing a three-dimensional object by applying layers of a building material, preferably a powder, and selectively solidifying the building material with at least one laser beam, and a manufacturing device, which is configured to perform the method of calibrating the manufacturing device.

### Background

Manufacturing devices for additively manufacturing a three-dimensional object by applying layers of a building material, preferably a powder, and solidifying it with at least one laser include a build chamber which contains an inert atmosphere, a build cylinder and at least one laser beam generating unit for directing at least one laser beam on the building material. The build cylinder contains a vertically movable substrate plate which is configured to enable applying layers of the building material by gradual lowering and is arranged underneath the build chamber, linked to the build chamber by positioning it at an opening in the hull of the build chamber and provides a build area for building three-dimensional objects. To ensure the inert atmosphere inside the build chamber the gas tightness of the build chamber and its adjacent components must be upheld while building the three-dimensional object and gas losses between the individual build processes have to be minimized. The laser beam generating unit includes at least one laser and at least one scanner. To increase the productivity also multiple laser beam generating units can be used. Every laser beam unit has its own characteristics resulting in laser beams with individual characteristics that influence the quality of the build process and finally the build quality of the produced three-dimensional objects. For three-dimensional objects with good build quality the laser beam generating units are calibrated individually.

The build cylinder may be exchangeable. The inert atmosphere is ensured by sealing the build chamber before removing the build cylinder, in particular with a lid, and by at least one seal at the interface of the build cylinder and the build chamber.

After the build cylinder is positioned at the interface to the build chamber the three-dimensional object is built with procedures that are known as "Selective Laser Sintering" and "Laser Metal Fusion". In these procedures the building material, that is preferably a ceramic powder or metal powder, is exposed to electromagnetic radiation, preferably laser light. The electromagnetic radiation provides sufficient energy and a suitable wavelength for melting or sintering the building material. First, a thin layer of the building material is spread over the substrate plate of the build cylinder with a wiper, roller, brush or blade. Second, after the thin layer is formed, the areas to be solidified are exposed to the electromagnetic radiation and melted or sintered. After the designated material is solidified the substrate plate is lowered and the two steps are repeated until the build of the three-dimensional objects is completed. The layers are merged with each other to form three-dimensional objects after the build process.

A proper calibration of the manufacturing device is essential for a good build quality of a three-dimensional object because of the relation between the build quality and the laser beam characteristics, in particular if a single object is manufactured with multiple irradiation beams.

In current solutions many measurements for the calibration of the manufacturing device have to be carried out in the working area of the laser, thus the measurement devices have to be mounted inside the working chamber, operated and then dismounted and stored back. These measurements and calibrations are often done periodically. In most cases, an operator operates the measurement device manually or with an external device and the manufacturing device is not capable of carrying out the measurements autonomously. For mounting and unmounting the measurement device in the build chamber manually, the production has to be stopped, the build chamber has to be opened and the inert atmosphere inside the build chamber is lost and has to be established again before the build of the next three-dimensional object can be conducted, which results in higher costs and a longer preparation time.

The mounting of the measurement device usually has to be done very precisely for a proper calibration of the manufacturing device. The calibration is often not as precise as possible because of inaccuracies induced by the manual mounting.

The measurement devices and/or the build cylinder have to be transported at least nearby the build chamber by the operator, resulting in a longer preparation time and physical load for the human operator.

Furthermore, the manual mounting and dismounting of a measurement device or a build cylinder with a new substrate plate often take a lot of time and need human resources during this time. Often, a service technician or an advanced operator is necessary to conduct the calibration of the manufacturing device.

DE 10 2013 208 651 A1 discloses a method for calibrating a device for additive manufacturing a three-dimensional object automatically by comparing two test patterns on a material generated with two scanning units with a reference pattern and minimizing the deviation between the patterns.

EP 3 915 766 A1 discloses an apparatus and a method for additive manufacturing a three-dimensional object comprising in-process measurement and control, in particular with a spectrometer to detect characteristic radiation.

The additive manufacturing system disclosed in EP 4 000 871 A1 includes a beam source sensor configured to determine a laser beam source sensor value from a source and an optics sensor configured to determine an optics sensor value from an optics measurement beam.

The method of WO 2018/153687 A1 includes calibrating a radiation system of an additive manufacturing device by irradiating a calibration structure and measuring the reflections.

Therefore, it is in particular an object of the present disclosure to provide a method of calibrating the manufacturing device, that can be performed without losing the inert atmosphere inside the build chamber while mounting or dismounting a build cylinder or a measurement device, can be done repeatedly without inaccuracies induced by a human, can reduce the preparation time and total process time, reduces the process costs, and can simplify the calibration of the manufacturing device for the operator.

In general, the present disclosure is directed, at least in part, to improving or overcoming one or more aspects of the prior systems, and in particular to provide an efficient approach for calibrating a manufacturing device for additively producing a three-dimensional object.

### Summary of the disclosure

Some of the objects may be achieved by a method of calibrating a manufacturing device for additively manufacturing a three-dimensional object by applying layers of a building material, preferably a powder, and selectively solidifying the building material with at least one laser beam as recited in claim 1 as well as by a corresponding manufacturing device. Further developments are defined in the dependent claims.

According to a first aspect, the present disclosure is directed to a method of calibrating a manufacturing device for additively manufacturing a three-dimensional object by applying layers of a building material, preferably a powder, and selectively solidifying the building material with at least one laser beam, wherein the manufacturing device comprises at least one laser beam generating unit for directing the at least one laser beam on the building material, a build chamber, which comprises an opening in the lower surface and is configured to keep an inert atmosphere at least while the manufacturing device is manufacturing the three-dimensional object, a build cylinder, which is configured to be arranged underneath the build chamber and at least temporarily linked to the build chamber by positioning it at the opening of the build chamber, wherein the build cylinder comprises a vertically movable substrate plate and a measurement cylinder, which is configured to be arranged underneath the build chamber and at least temporarily linked to the build chamber by positioning it at the opening of the build chamber, wherein the method comprises the following steps: placing the build cylinder or the measurement cylinder at the opening of the build chamber, building a three-dimensional object inside the build cylinder and calibrating the manufacturing device with the measurement cylinder containing a measurement device before and/or after building the three-dimensional object.

Carrying out a measurement with a measurement device may take place without building a three-dimensional object immediately before or after the measurement, in particular for testing and/or service and/or programmed maintenance.

This inventive method of calibration according to the first aspect provides a calibration procedure that simplifies the calibration of the manufacturing device for the operator, reduces the preparation time and total process time, and also reduces the process costs.

Moreover, the build cylinder and/or the measurement cylinder are conveyed at least nearby the opening of the build chamber by a conveying device, such as an elevator, a conveyor belt, an automated guided vehicle, a robot or a rail system.

Additionally, the inert atmosphere inside the build chamber may be assured by a first sealing lid closing the build chamber after the build of the three-dimensional object or after the calibration of the manufacturing device. This enables sustaining the inert atmosphere inside the build chamber during the mounting and/or dismounting of the measurement cylinder or the build cylinder.

Furthermore, the build cylinder or the measurement cylinder may be sealed with a second sealing lid after the build of the three-dimensional object or the calibration, respectively.

Alternatively or additionally, a service cylinder provides at least one device for the maintenance and/or the repair of the manufacturing device and/or at least one exchange part for the repair of the manufacturing device.

In some embodiments, the substrate plate inside of the build cylinder is preheated before and/or while mounting the build cylinder at the opening to the build chamber. This allows a reduction of the preparation time and furthermore a higher build quality of the three-dimensional object.

Alternatively or additionally, the measurement device is stored in a storage compartment inside the build chamber.

Moreover, the gas flow inside of the build chamber may be measured by the measurement device, in particular with a gas flow meter.

According to a further embodiment, the focus shift is measured by the measurement device, in particular by directing the laser beam at an opaque plate and analyzing the patterns created by the laser beam on the opaque plate at multiple points in time.

Alternatively or additionally, the laser beam caustic and/or laser beam power are measured by the measurement device, in particular with a device for beam profiling and/or a laser power meter.

Alternatively or additionally, the scan field is calibrated by the measurement device, in particular with a scan field calibrator containing a scan field plate with multiple bores.

In some embodiments, at least one sensor and/or detector of the manufacturing device is characterized and/or aligned and/or calibrated in some way making use of one or more objects and/or one or more measurement devices and/or one or more known targets which is/are installed in the measurement cylinder.

Furthermore, the scan field plate is used to calibrate the monitoring of the building material, in particular the measurement devices used for the monitoring of the building material, when the building material is spread over the opening of the build chamber.

Additionally, scan field plate may be used to a three-dimensional calibration of measurement devices, in particular cameras, installed in manufacturing device.

In some embodiments, the measurement device is mounted on a moving translationally and/or rotating and/or tilting motorized stage on or in the measurement cylinder.

Moreover, the adjustments for the calibration of the manufacturing device may be performed by the manufacturing device automatically, in particular with a control unit. This enables a reduction of the process costs, repeating the process without inaccuracies induced by a human and a reduction of the preparation and process time.

In some embodiments, a guiding system and/or an aligning system moves the build cylinder or the measurement cylinder precisely to the opening to the build chamber to ensure the gas tightness of the build chamber. According to this, the inert atmosphere inside the build chamber can be upheld better.

Furthermore, the unsolidified building material may be automatically removed from the build cylinder or the measurement cylinder before or after the removal of the build cylinder or the measurement cylinder from the opening of the build chamber.

According to a second aspect, the present disclosure is directed to a manufacturing device for additively manufacturing a three-dimensional object by applying layers of a building material, preferably a powder, and selectively solidifying the building material with at least one laser beam, wherein the manufacturing device comprises at least one laser beam generating unit for directing the at least one laser beam on the building material, a build chamber, which comprises an opening in the lower surface and is configured to keep an inert atmosphere at least while the manufacturing device is manufacturing the three-dimensional object, a build cylinder, which is configured to be arranged underneath the build chamber and at least temporarily linked to the build chamber by positioning it at the opening of the build chamber, wherein the build cylinder comprises a vertically movable substrate plate, a measurement cylinder, which is configured to be arranged underneath the build chamber and at least temporarily linked to the build chamber by positioning it at the opening of the build chamber, and a control unit, which is configured to perform a method according to the present invention.

Other features and aspects of this disclosure will be apparent from the following description and the accompanying drawings.

### Brief description of the drawings

The accompanying drawings, which are incorporated herein and constitute a part of the specification, illustrate exemplary embodiments of the disclosure and, together with the description, serve to explain the principles of the disclosure. In the drawings:
- Fig. 1: schematically shows a manufacturing device for powder bed-based additive manufacturing of three-dimensional objects,
- Fig. 2a-h: schematically show a manufacturing process for powder bed-based additive manufacturing of three-dimensional objects, wherein the build cylinders are provided by a conveying device,
- Fig. 3a-e: schematically show a manufacturing process for powder bed-based additive manufacturing of three-dimensional objects with integrated measurement steps and/or calibration steps, wherein the build cylinder and measurement cylinders are provided by a conveying device,
- Fig. 4: schematically shows a conveying device, in particular an automated guided vehicle, providing a measurement cylinder for the calibration of the manufacturing device,
- Fig. 5: schematically shows the sealing of the build chamber with a first sealing lid to uphold the inert atmosphere inside the build chamber when removing the build cylinder or the measurement cylinder,
- Fig. 6: schematically shows the sealing of the build cylinder after the build of the three-dimensional object with a second sealing lid,
- Fig. 7: schematically shows a service cylinder providing an exchange part for the repairs of the manufacturing device,
- Fig. 8: schematically shows a service cylinder providing a device for the maintenance and/or the repair of the manufacturing device,
- Fig. 9: schematically shows the preheating of the substrate plate inside the build cylinder before mounting the build cylinder at the opening to the build chamber,
- Fig. 10a,b: schematically show a process for storing the measurement cylinder in a compartment inside the build chamber,
- Fig. 11: schematically shows a measurement cylinder for measuring the gas flow inside the build chamber with a gas flow meter for the calibration of the manufacturing device,
- Fig. 12: schematically shows a measurement cylinder for measuring the focus shift of the laser beam generating unit for the calibration of the manufacturing device,
- Fig. 13: schematically shows a measurement cylinder for measuring the laser beam caustic for the calibration of the manufacturing device,
- Fig. 14: schematically shows a measurement cylinder for measuring the laser beam power for the calibration of the manufacturing device,
- Fig. 15: schematically shows a measurement cylinder for measuring the scan field of the laser beam generating unit for the calibration of the manufacturing device,
- Fig. 16: schematically shows a measurement cylinder for measuring laser beam characteristics, wherein the measurement cylinder contains a vertically movable and tiltable stage on which the measurement device is mounted,
- Fig. 17: schematically shows a measurement cylinder for measuring laser beam characteristics, wherein the measurement cylinder contains a translationally movable stage on which the measurement device is mounted,
- Fig. 18: schematically shows a layout of a manufacturing device for additive manufacturing that can execute the steps for automatically calibrating itself with a control unit and a measurement cylinder,
- Fig. 19: schematically shows an aligning system for the precise positioning of the measurement cylinder or the build cylinder,
- Fig. 20: schematically shows a guiding system for the precise positioning of the measurement cylinder or the build cylinder, and
- Fig. 21: schematically shows a manufacturing device for powder bed-based additive manufacturing, wherein the unsolidified build material is removed after the build of the three-dimensional objects.

### Detailed description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many environments and for many different applications. Therefore, the exemplary embodiments are not intended to be, and should not be considered as, a limiting description of the scope of patent protection. Rather, the scope of patent protection shall be defined by the appended claims.

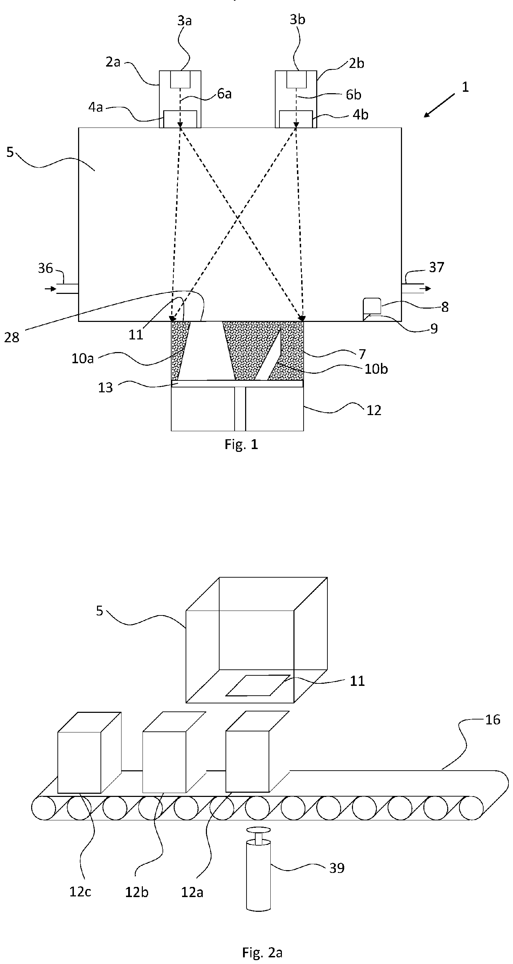

**Fig. 1** schematically shows a manufacturing device 1 containing two laser beam generating units 2a, 2b, a build chamber 5 and a build cylinder 12. Laser beam generating units 2a, 2b each comprise a laser 3a, 3b generating electromagnetic radiation and a scanning unit 4a, 4b, each of which deflects a laser beam 6a, 6b. Scanning units 4a, 4b direct laser beams 6a, 6b in a way that leads to laser beams 6a, 6b irradiating a building material 7 in a scan field 28 that lies in an opening 11 at the lower surface of build chamber 5 using their optical components 52 like mirrors and lenses. For example, each scanning unit 4a, 4b may comprise a scanner mirror (not shown) rotatable in two directions or two scanner mirrors (not shown) rotatable in one direction. For example, each scanning unit 4a, 4b may comprise a galvanometer scanner and/or an f-theta lens 62 which is often used at the outlet of laser scanning units 4a, 4b for focusing laser beam 6a, 6b onto a flat image field. Build chamber 5 is designed to provide an enclosed process environment, accesses for laser beam generating units 2a, 2b, accesses for creating a gas flow 22 and opening 11 at its lower surface.

At opening 11 of build chamber 5, build cylinder 12 is placed. Build cylinder 12 contains a movable substrate plate 13, which allows layers of building material 7, in this figure a powder that is fusible with the energy of laser beams 6a, 6b and provided by manufacturing device 1, to be applied by a recoating unit 8 using a recoating lip 9. Recoating lip 9 may be made out of rubber but may also be a blade, wiper or cylinder. After substrate plate 13 is lowered, recoating unit 8 pushes a small pile of building material 7 over scan field 28 resulting in a new layer that can be solidified by laser beams 6a, 6b. According to this, the shown two three-dimensional objects 10a, 10b are generated layer by layer inside build cylinder 12.

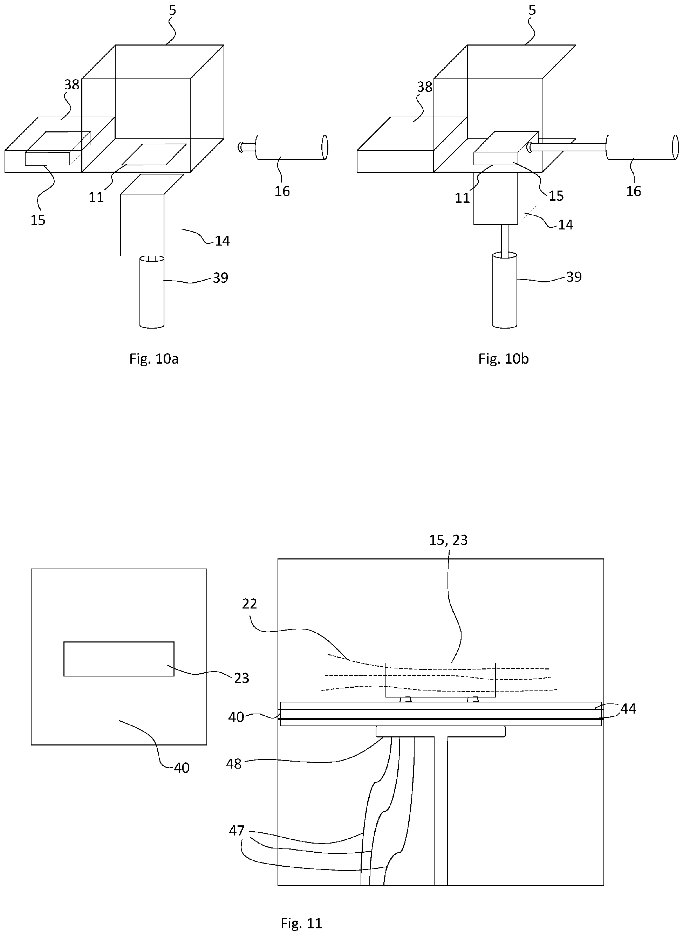

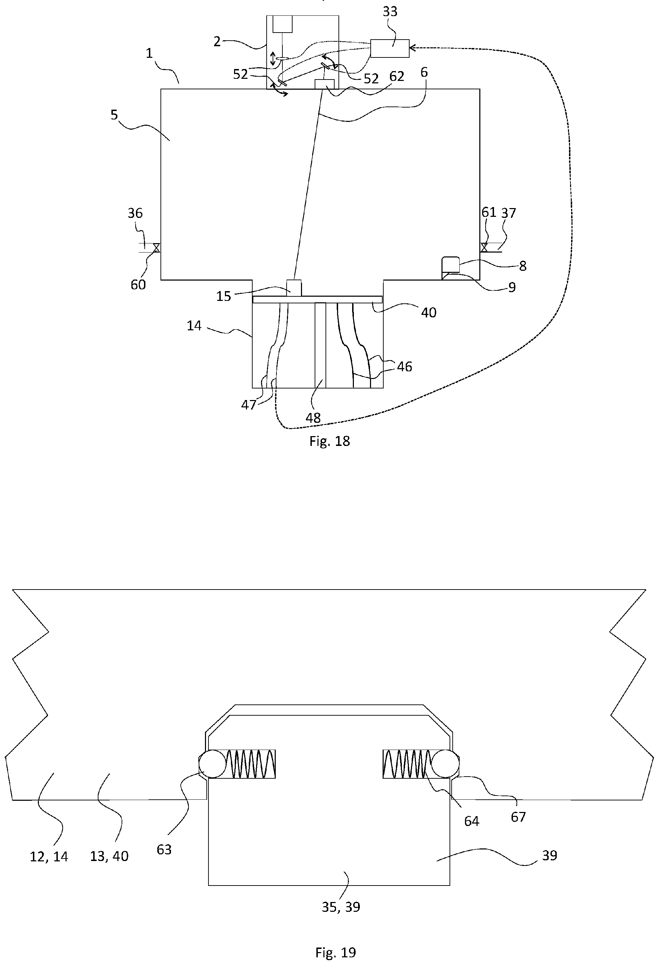

During the build process, an inert atmosphere is built up and maintained inside build chamber 5 to ensure a good process quality by providing a controlled environment for the melting process. Opening 11 of build chamber 5 is closed with build cylinder 12. Only a gas inlet 36 and a gas outlet 37, which are connected to a gas providing system, create a controlled volume exchange by establishing a continuous protective gas flow 22 (cf. Fig. 11) inside build chamber 5 to prevent the build-up of smoke and to remove particles and condensates from the atmosphere during the build process to reduce interference with laser beams 6a, 6b. Gas inlet 36 is also used to fill build chamber 5 with an inert, preventive gas to build-up the inert atmosphere. As an example, gas inlet 36 and gas outlet 37 may comprise an inlet valve 60 and an outlet valve 61 (cf. Fig. 18) to ensure a controlled gas flow 22 and the gas tightness of build chamber 5, if gas flow 22 is shut down. The gas tightness of build chamber 5 may also be ensured by sealings between build cylinder 12 and build chamber 5.

Build cylinder 12 may have an oval or circular base area and a jacket area, but an angular base area in combination with a jacket area is also possible.

**Fig. 2a****-h** schematically show a manufacturing process for powder bed-based additive manufacturing of three-dimensional objects 10, wherein build cylinders 12a, 12b, 12c and 12d are provided by a conveying device 16, in particular a conveyor belt.

First, build cylinders 12a, 12b, 12c are placed on conveying device 16 or conveying device 16 such as a robot picks up build cylinder 12a, 12b, 12c from a pick-up area and conveying device 16 moves a first build cylinder 12a under opening 11 of build chamber 5. For example, the correct positioning may be determined by image processing, a light barrier or a mechanical barrier. After first build cylinder 12a has reached its correct position, an elevating device 39 arranged underneath build chamber 5 pushes first build cylinder 12a to opening 11 of build chamber 5.

Elevating device 39 positions first build cylinder 12a in a way that it shuts opening 11 of build chamber 5. After build chamber 5 is closed, the build process including the inertization of the process atmosphere, the heating of substrate plate 13a and the start of gas flow 22 starts. Laser beams 6a, 6b solidify building material 7 inside scan field 28 which defines the area in which laser beams 6a. 6b are used for building three-dimensional objects 10.

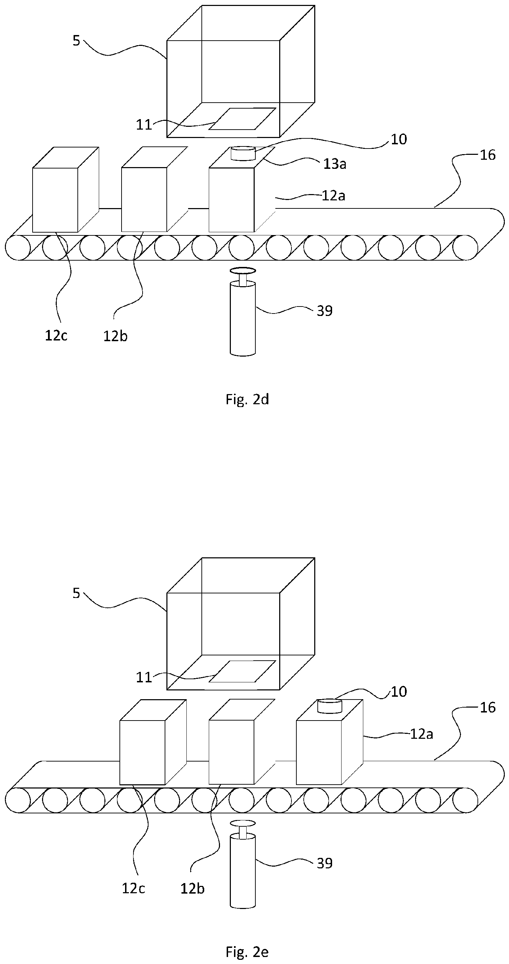

After first three-dimensional object 10 is build according to the process described in the description of Fig. 1, elevating device 39 lowers first build cylinder 12a back onto conveying device 16. Substrate plate 13a may be lifted as shown in Fig. 2d-g or lowered into first build cylinder 12a.

Then, conveying device 16 removes first build cylinder 12a from under opening 11 of build chamber 5 and positions the second build cylinder 12b under opening 11. The same process as for first build cylinder 12a is performed for second build cylinder 12b. For providing and removing first and second build cylinders 12a, 12b two separate conveying devices 16 may be used.

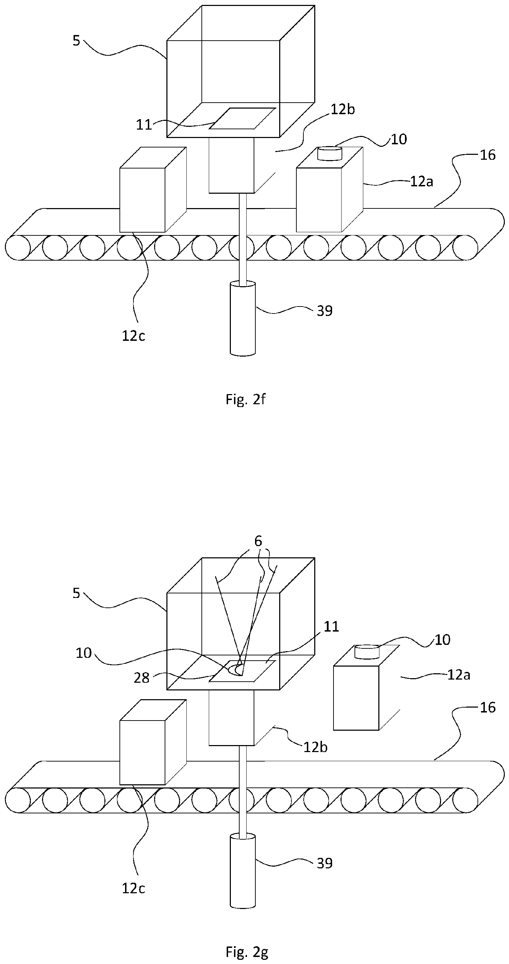

First build cylinder 12a is removed from conveying device 16, but may remain on conveying device 16, too. The removal of first build cylinder 12a may take place while, after or before three-dimensional object 10 is built in second build cylinder 12b. In Fig. 2g it takes place during the build process including second build cylinder 12b. For the removal of build cylinders 12a-12d, a pick-up area may be determined.

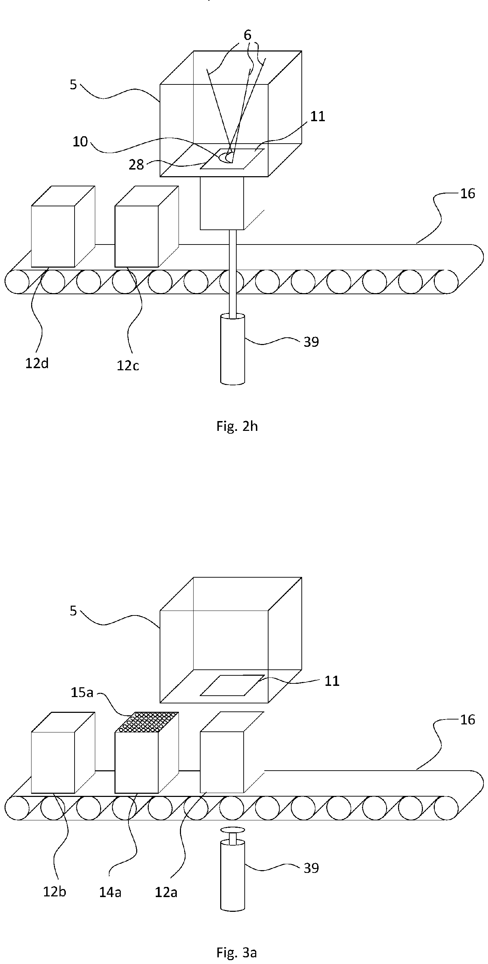

According to Fig. 2h, another build cylinder 12d is placed on conveying device 16 while the build process including second build cylinder 12b takes place. This may also take place before or after the build process including second build cylinder 12b and may be independent from the removal of first build cylinder 12a from conveying device 16.

Not only one, but also multiple three-dimensional objects 10 can be manufactured in the same build cylinder 12a-d. The three-dimensional objects 10 manufactured in each build cylinder 12a-d may have the same shape or shapes that are different from each other. The machine process conditions, for example the oxygen level, gas flow speed and preheating temperature, are set according to the respective build job requirements.

Build cylinders 12a-d usually need a set of services, for example cooling, heating power. These are provided by manufacturing device 1 via interfaces.

The described process limits the interventions by the operator to two tasks: Picking up the finished build cylinders 12a-d from a pick-up area or conveying device 16 for further processing and placing new build cylinders 12a-d in a feed area or on conveying device 16.

**Fig. 3a****-e** schematically show a manufacturing process for powder bed-based additive manufacturing of three-dimensional objects 10 with integrated measurement steps and/or calibration steps, wherein build cylinders 12a-12c and two measurement cylinders 14a, 14b with similar external shapes or rather surface shapes are provided by conveying device 16, in particular a conveyor belt. The transportation of build cylinders 12a-12c and measurement cylinders 14a, 14b is similar to the process described in the description of Fig. 2a-h.

The process steps regarding build cylinders 12a-12c are similar to the steps described in the description of Fig. 1.

Similar to the process steps shown in Fig. 1, first build cylinder 12a is conveyed under opening 11 of build chamber 5, elevated by elevating device 39 and three-dimensional object 10 is built, before first build cylinder 12a is removed, and conveyed away into an area where an operator or another conveying device 16 can pick up first build cylinder 12a.

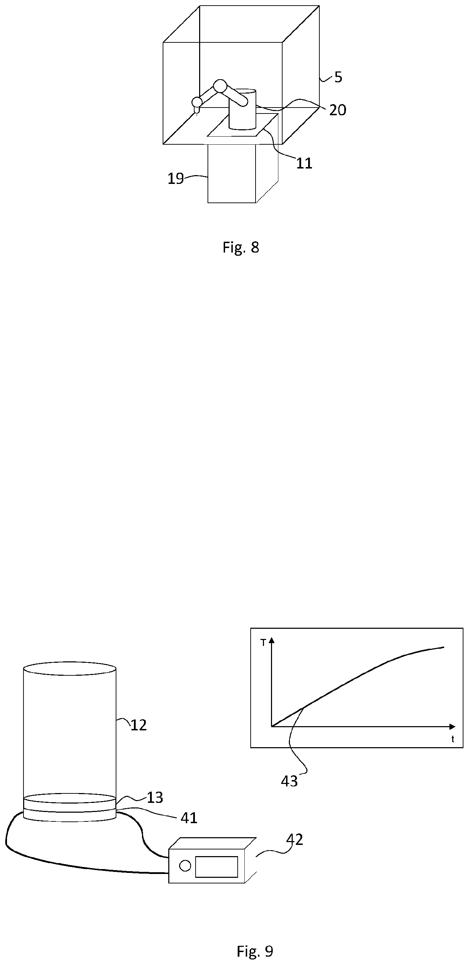

Instead of another build cylinder 12a-c, measurement cylinder 14a comprising at least one measurement device 15a on a measurement device stage 40 is placed at opening 11 of build chamber 5, similar to the process of build cylinder 12a. But instead of building a three-dimensional object 10, laser beams 6 are directed on a measurement device 15a and scan fields 28 of laser beam generating units 2 are measured for the calibration of manufacturing device 1 using measurement device 15a, in particular a scan field plate 30 with multiple bores 31. A detailed example of a scan field calibration is shown in the description of Fig. 11. The scan field calibration can be substituted or combined with other calibration processes, for example the calibration processes shown in the descriptions of Figures 8, 9, 10 and 12. The choice of the calibration process may be made by using a pre-determined plan or depending on which build process deviation was registered. The point of time when measurement device 15 is used for the calibration may be depended on a pre-determined plan or a calibration is scheduled if a build process deviation is registered or the calibration processes may be planned manually by an operator.

In the exemplary process shown in Fig. 3a-3e another build process with second build cylinder 12b takes place after the scan field calibration, similar to the steps shown in the description of Fig. 2a-2h.

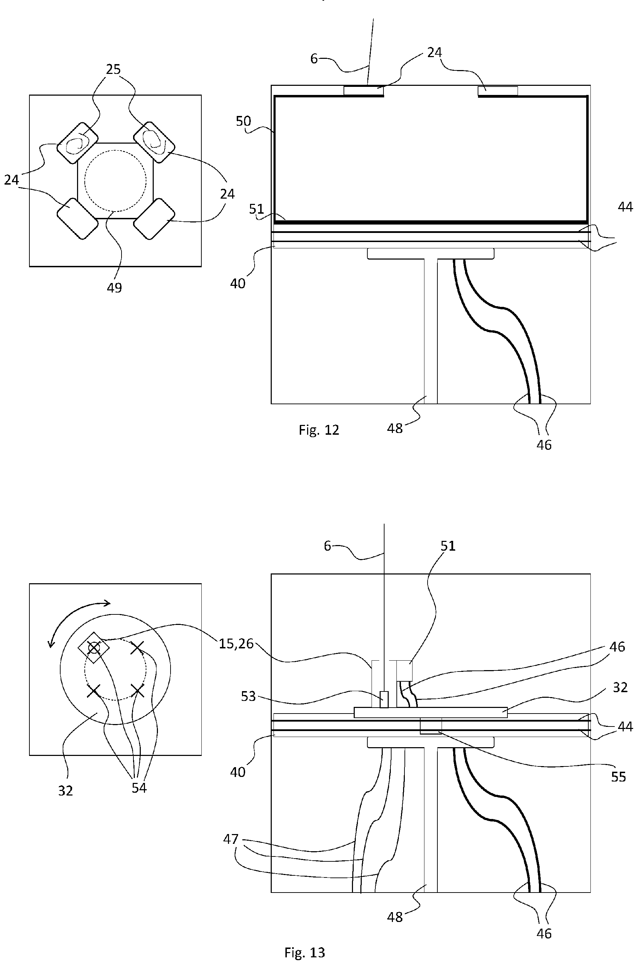

Then, measurement cylinder 14b containing measurement devices 15b is used for the calibration of manufacturing device 1. Laser beams 6 are directed on measurement devices 15b, in particular devices for beam profiling 26. A detailed example of a beam profile measurement is shown in the description of Fig. 13.

Some types of measurement devices 15a,b may need the services that are already provided by manufacturing device 1, but other types of measurement devices 15a,b may need additional services, for example USB connection, serial connection or electric power. To provide these services, measurement cylinders 14 and manufacturing device 1 comprise suiting interfaces.

The measurement processes may either be triggered and/or controlled by an operator via a human-machine-interface or automatically by manufacturing device 1 after the correct position of measurement cylinder 14a,b is registered. To insert measurement cylinder 14a,b if multiple build cylinders 12a-c are already loaded into manufacturing device 1, conveying device 16 may comprise an interface to insert measurement cylinder 14a,b, for example by an intersection of two conveyer belts, and/or manufacturing device 1 provides possibilities to remove the already loaded build cylinders 12a-c and/or measurement cylinders 14a,b.

By the automated mounting and dismounting of measurement cylinders 14a,b, the setup time can be reduced significantly. For example, experiments conducted by the inventors have shown that the time needed for a scan field calibration was significantly reduced by 60% and for a calibration using a device for beam profiling 26 by 25% compared to a manual installation. Furthermore, no human resources are needed anymore by automatizing the process.

The results of the measurements done for the calibration process may be used for generating reports and making recommendations for maintenance and repair processes. If needed, the production process can be stopped and an operator is called.

The operator can pre-load multiple build cylinders 12a-c or measurement cylinders 14a,b, resulting in a simplified work progress for the operator. These two tasks can be performed independent from each other and even these two tasks may be automatized by using another conveying device 16, for example a conveyor belt, an automated guided vehicle, a robot or a rail system.

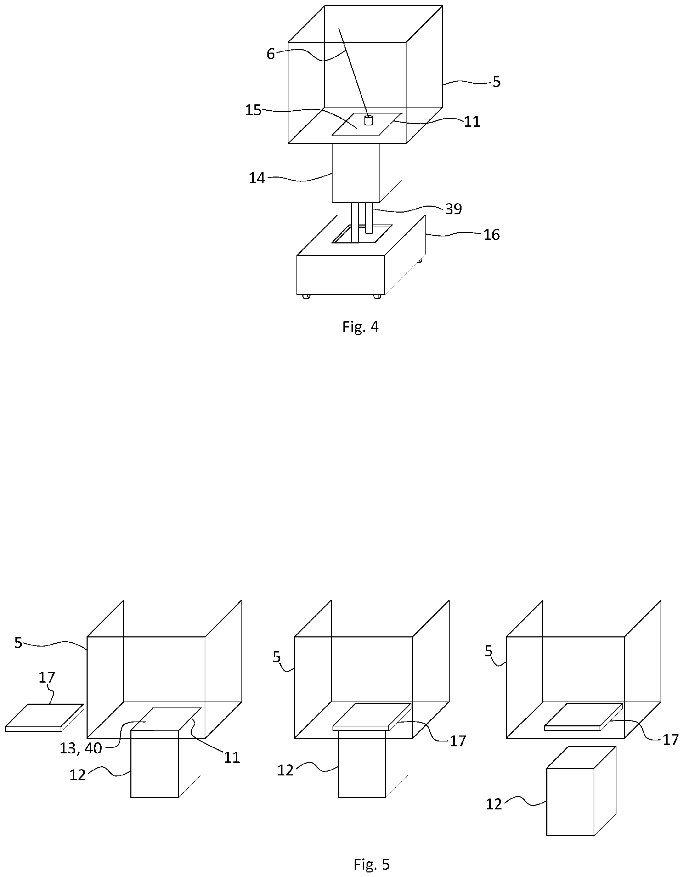

As can be inferred from **Fig. 4****,** conveying device 16 transporting measurement cylinder 14 or build cylinder 12 can have multiple shapes that also vary from the shape, conveyor belt, shown in Fig. 2a-2h and Fig. 3a-3e.

A conveying device 16, in particular an automated guided vehicle, transports measurement cylinder 14 to opening 11 of build chamber 5. Measurement cylinder 14 may be positioned on conveying device 16 by a robot or an operator or it may be able to pick up measurement cylinder 14 from a storage by itself.

Measurement cylinder 14 may also be a build cylinder 12 and conveying device 16 may also have the shape of a robot, especially a robotic arm, or a rail system.

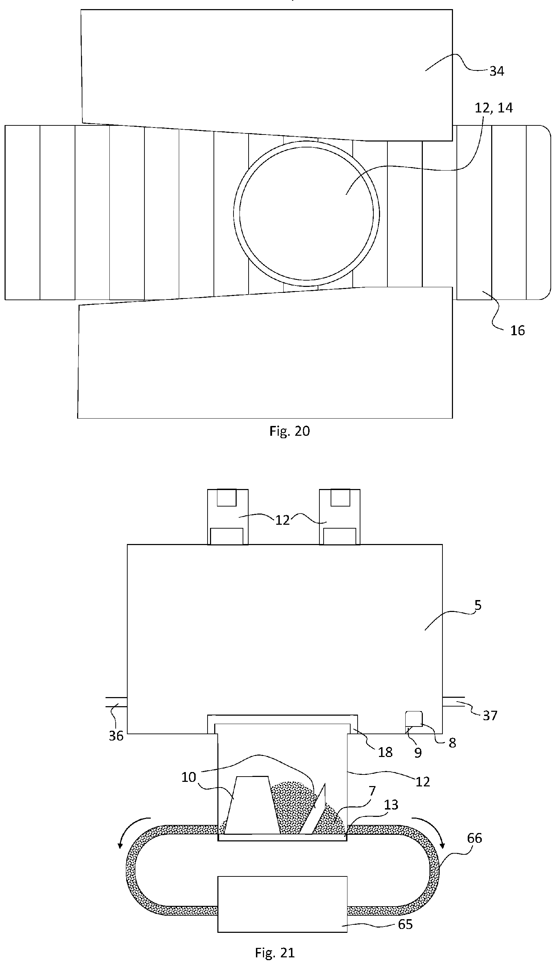

In Fig. 4 conveying device 16 has an integrated elevating device 39 to position measurement cylinder 14 at opening 11. The precise positioning of measurement cylinder 14 may be supported by a guiding system 34 or an aligning system 35 shown in the description of Fig. 19 and Fig. 20. Conveying device 16 may also include elevating device 39.

It is also possible that conveying device 16 hands over measurement cylinder 14 to another conveying device 16 that thereon positions measurement cylinder 14 to its correct position, that conveying device 16 hands over measurement cylinder 14 to elevating device 39, or that another conveying device 16 picks up measurement cylinder 14 from conveying device 16.

**Fig. 5** schematically shows the sealing of build chamber 5 before the removal of build cylinder 12.

By sealing build chamber 5 the inert atmosphere inside build chamber 5 is upheld. This reduces the process time and, as most inert gases are high-priced, the process costs.

Build cylinder 12 may be substituted by measurement cylinder 14. The sealing of build chamber 5 is similar for both types of cylinders. It is crucial that substrate plate 13 or measurement device stage 40 is lowered enough so that a first sealing lid 17 does not interfere with objects contained in build cylinder 12 or measurement cylinder 14.

First sealing lid 17 may be integrated in the hull of build chamber 5 or may have the shape of a lid or a plug and be placed on or in opening 11 of build chamber 5.

If first sealing lid 17 is integrated in the hull of build chamber 5, it could be slid into, under or over opening 11 or have the shape of a shutter. If first sealing lid 17 has the shape similar to a hat, it may be slid, swiveled or placed from above or below over or under opening 11. If first sealing lid 17 has the shape of a plug, it may be slid, swiveled or placed from above or below into opening 11.

First sealing lid 17 may be held in place by press fitting, adhesion, screws, screwing itself onto or into a thread, clamps or other detachable fixing mechanisms and the sealing of build chamber 5 may take place before, while or after build cylinder 12 is removed.

Fig. 5 shows an example of build chamber 5 being closed with first sealing lid 17 slid over opening 11.

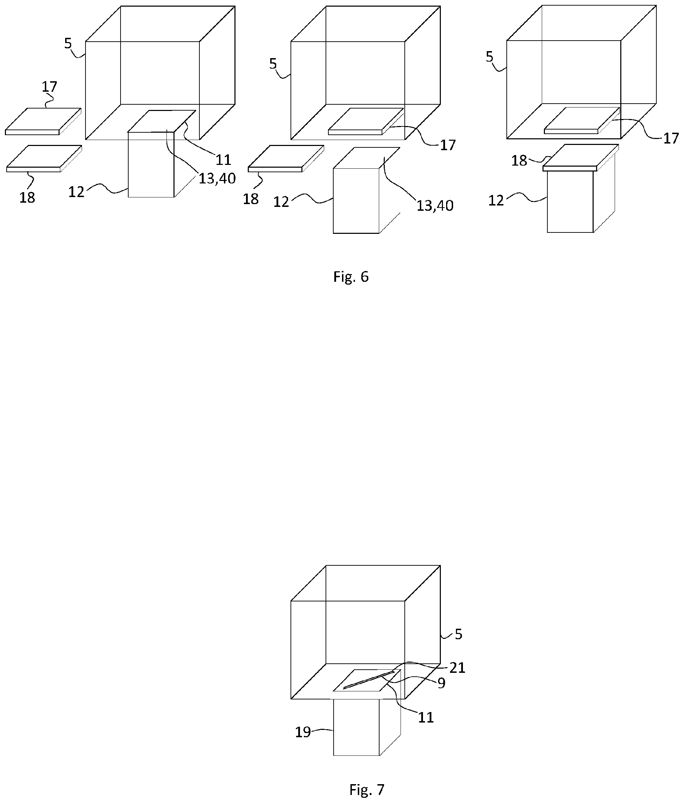

**Fig. 6** shows an example of how build cylinder 12 is sealed with a second sealing lid 18 after three-dimensional object 10 was built.

It is possible that build chamber 5 is sealed according to the method shown in the description of Figure 5, too, but the if build cylinder 12 is sealed or not is independent of the sealing of build chamber 5.

By sealing build cylinder 12, air contamination by building material 7 is prevented. This is advantageous as some building materials 7, especially metal powders, are a health risks for humans exposed to it and some building materials 7, especially powders, are a fire hazard if building material 7 is exposed to oxygen.

Second sealing lid 18 may be screwed onto or into build cylinder 12, have a snap mechanism, be used like a plug or be held in place by adhesion, press fitting or other detachable fixing mechanisms.

Build cylinder 12 may be substituted by measurement cylinder 14. The sealing is similar for both types of cylinders. It is crucial that substrate plate 13 or measurement device stage 40 is lowered enough so that second sealing lid 18 does not interfere with objects contained in build cylinder 12 or measurement cylinder 14.

In Fig. 6 build cylinder 12 is closed with second sealing lid 18 after build cylinder 12 was removed from opening 11. If second sealing lid 18 has a certain shape, for example the shape of a plug, it may seal build cylinder 12 before it is removed from opening 11. The sealing may also happen in a channel to ensure that build cylinder 12 is kept in a controlled environment before it is sealed.

As can be inferred from **Fig. 7****,** a service cylinder 19 can provide an exchange part 21 for repairs or the maintenance of manufacturing device 1.

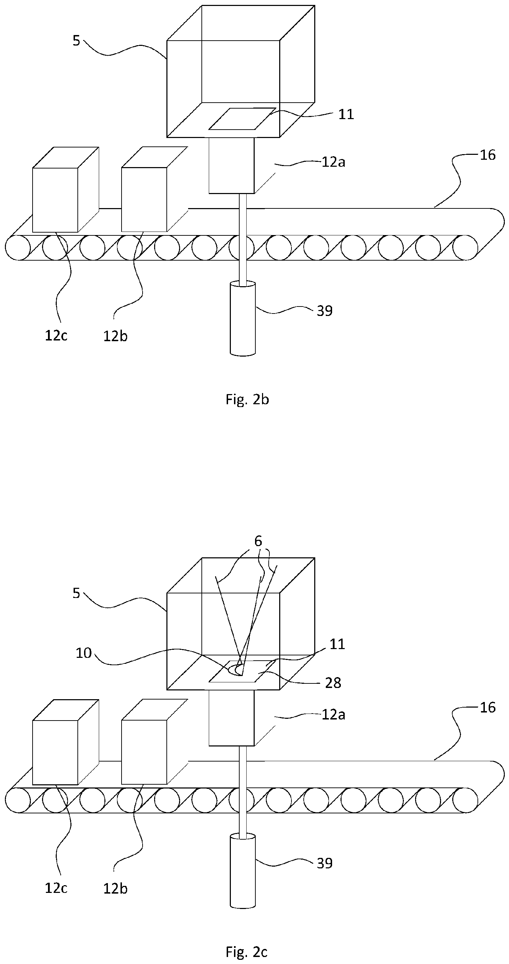

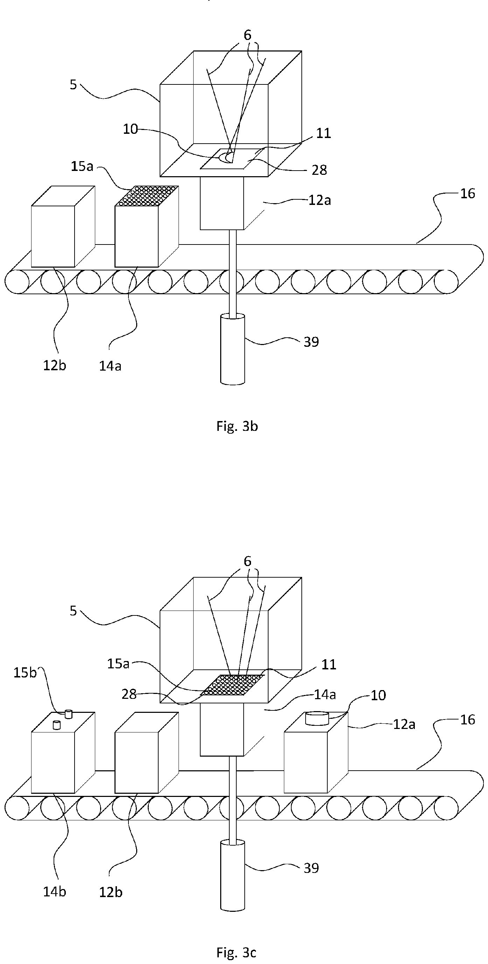

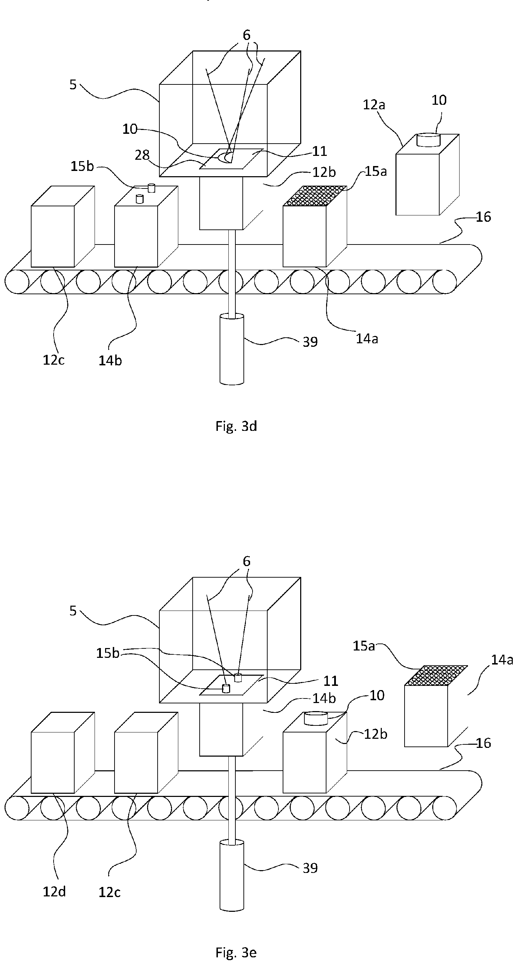

Service cylinder 19 is positioned at opening 11 in the same way as build cylinder 12 or measurement cylinder 14 described in the description of Fig. 2 and 3 and may provide one exchange part 21 or multiple exchange parts 21, from which manufacturing device 1 picks up the needed ones, on its stage.

A part of manufacturing device 1 that is often exchanged is recoating lip 9. Recoating unit 8 may be designed to be capable of removing the mounted recoating lip 9 and picking up exchange part 21. Another solution may be an integrated device inside manufacturing device 1 or a maintenance and repair device 20 mounted in service cylinder 19, further described in the description of Fig. 8. Providing exchange part 21 automatically lowers the repair and maintenance costs and needed repair and maintenance time significantly in comparison to providing them manually. Also, if the repair and/or maintenance are performed manually the repair and maintenance process is simplified for the operator.

**Fig. 8** schematically shows service cylinder 19 providing maintenance and repair device 20. This is especially suitable for maintenance and repair devices 20 that cannot be placed permanently inside build chamber 5.

Maintenance and repair device 20 may be used for dismounting parts of manufacturing device 1 and/or mounting an exchange part 21 and/or for modifying manufacturing device 1.

Another use case is cleaning parts of manufacturing device 1, in particular optical components 52 of scanning unit 4, in particular the elements in contact with the process atmosphere of build chamber 5. Contamination of the optical components 52, for example mirrors or lenses, can lower the energy density of laser beam 6 and/or lower the laser beam quality, for example by thermal lens effects, if laser beam 6 irradiates dispersed particles of building material 7 and heats them up. Furthermore, optical components 52 can be damaged if they are not cleaned on a regular basis.

Maintenance and repair device 20 can also be used to clean manufacturing device 1 before another build cylinder 12 or measurement cylinder 14 is mounted.

Maintenance and repair device 20 may be configured to fulfill multiple tasks, for example a configuration as a robotic arm being able to pick up multiple tools, or have dedicated functions, for example cleaning optical components 52 or changing recoating lip 9.

Maintenance and repair device 20 might be combined with measurement device 15. This is especially suitable for calibration processes that cannot be done by manufacturing device 1 without external devices.

As can be inferred from **Fig. 9****,** substrate plate 13 of build cylinder 12 can be preheated before and/or while build cylinder 12 is mounted at opening 11.

The inventors have found that preheating substrate plate 13 before and/or during the mounting is advantageous because most additive manufacturing devices 1 use heated substrate plates 13 for their process to reduce stress in the built three-dimensional objects 10. Some additive manufacturing devices 1 heat up the used substrate plates 13 up to 500°C and most substrate plates 13 are made of metal. Heating up a massive metal plate may take up to one hour and is most of the times done after substrate plate 13 is mounted in manufacturing device 1. This results in a significantly longer process time. If substrate plate 13 is preheated, the heating time after mounting build cylinder 12 can be reduced or even omitted.

Fig. 9 shows an exemplary set-up of preheating substrate plate 13 using a heating device 41 connected to a heating control 42. Heating device 41 may be an external device or integrated in substrate plate 13 as substrate plate 13 has to be heated during the build process, too. Substrate plate 13 can be preheated before mounting it in build cylinder 12, in the process of mounting build cylinder 12 or while it is already mounted at opening 11.

Heating control 42 enables an energy efficient heating process. It may be connected to the general control of manufacturing device 1. It can reduce thermal losses by choosing a suitable temperature curve 43, showing the temporal sequence of the temperature, and timing the preheating with the mounting process of build cylinder 12. Heating control 42 may be integrated into other control systems.

**Fig. 10a**,b show a process for storing measurement device 15 in a storage compartment 38 inside build chamber 5.

Build chamber 5 has a storage compartment 38 for storing measurement devices 15 for calibrating manufacturing device 1. Conveying device 16 moves measurement device 15.

Measurement device 15 may already be stored inside measurement cylinder 14 to provide needed interfaces to manufacturing device 1 or it is placed in measurement cylinder 14 by conveying device 16 such as a pushing rod with a suction tool. Measurement cylinder 14 is held in place by elevating device 39. It is also possible that measurement device 15 is placed in build cylinder 12 on top of substrate plate 13.

**Fig. 11** schematically shows a section of measurement cylinder 14 for measuring gas flow 22 inside build chamber 5 with a gas flow meter 23 for the calibration of manufacturing device 1.

Measurement cylinder 14 contains a piston 48 for positioning measurement device stage 40 vertically and measurement device 15, in particular gas flow meter 23, in measurement cylinder 14 and build chamber 5. Gaskets 44 between the measurement device stage 40 and the hull of measurement cylinder 14 ensure the gas tightness of measurement cylinder 14 when it is linked to build chamber 5.

Gas flow meter 23 is positioned on measurement device stage 40 which gets the needed power and data from power and data supply 47 and can be pushed into build chamber 5 by piston 48.

Measuring gas flow 22 is necessary for quality assurance processes and the calibration of manufacturing device 1. An insufficient or obstructed gas flow 22 results in a lower quality of built three-dimensional objects 10. The measured gas flow 22 is created between gas inlet 36 and gas outlet 37.

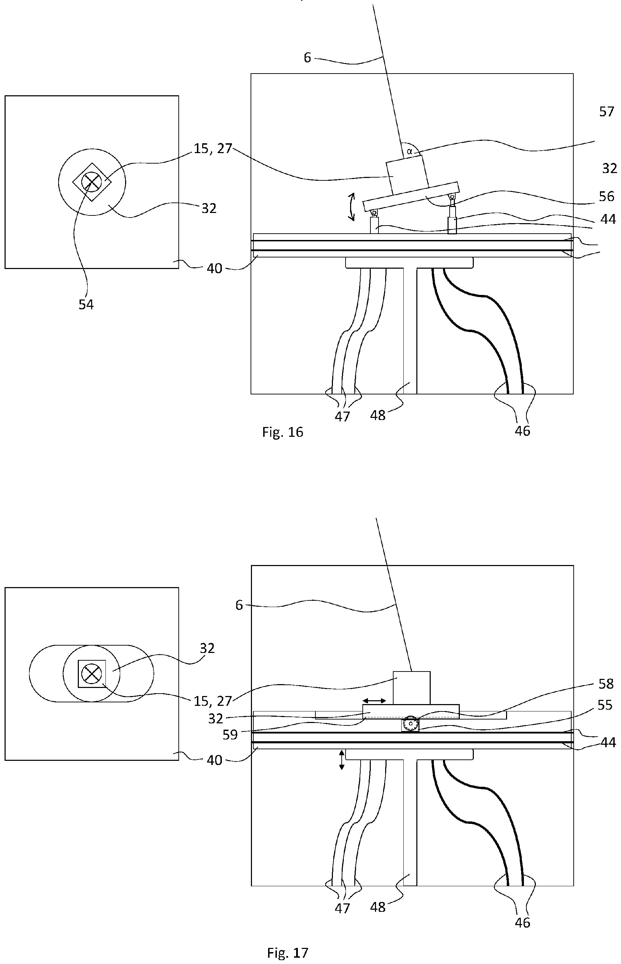

Not only the speed of gas flow 22, but also the velocity and characteristics, for example the laminarity, temperature and purity, may be measured. It may be advantageous to place measurement device 15 on a moving translationally and/or rotating and/or tilting motorized stage 32 for measuring the characteristics of gas flow 22 according to Fig. 16, 17 and their description.

**Fig. 12** schematically shows measurement cylinder 14 arranged for measuring the focus shift of at least one laser beam generating unit 2 for the calibration of manufacturing device 1.

Measurement cylinder 14 comprises piston 48, measurement device stage 40 providing interfaces for cooling, data and energy, a dumper 45 for dumping energy of laser beam 6, gaskets 44 for ensuring the gas tightness when measurement cylinder 14 is linked to build chamber 5, a spacer 50 and opaque plates 24 that are irradiated by laser beam 6. Currently, the inventors often use aluminum plates as opaque plates 24 and spacer 50 ensures a defined distance between opaque plates 24 and dumper 45.

By irradiating opaque plates 24 patterns 25 designed suitable for focus shift measurements are generated on opaque plates 24 and information about the intensity of laser beam 6 can be derived and the focal position can be determined.

To measure the focus shift, laser beam 6 is first directed at one opaque plate 24 when optical components 52 of scanning unit 4 are not heated up and a first pattern 25 is generated. Afterwards, laser beam 6 is directed along a dumper path 49 on dumper 45 underneath opaque plates 24 with high laser power to heat up the optical components 52 of scanning unit 4. By heating up, the optical characteristics of optical components 52 and the focal position of laser beam 6 are changed, resulting in a focus shift. The focus shift results in a second pattern 25 that differs from first pattern 25 that was generated with cooler optical components 52. From the differences between patterns 25, the focus shift can be calculated.

Because a lot of laser energy is dumped during the measurement process measurement device 15 needs to be cooled. The cooling may be realized by using a water-cooling system comprising a cooling water supply 46 using an interface to manufacturing device 1. Cooling water supply 46 is tube-shaped, connected to a water supply system and may also carry other cooling fluids.

It may be advantageous for the measurements to design measurement device 15 to be rotatable, translationally movable and/or tiltable.

The automation of the focus shift measurement process is also advantageous because the dumped laser energy heats up measurements cylinder 14. If it is supposed to be removed manually, the operator has to wait for measurement cylinder 14 to cool down or he has to take additional precautious measures to prevent risks.

**Fig. 13** shows a schematic view of a measurement cylinder 14 for profiling laser beam 6 for calibrating manufacturing device 1.

The measurement cylinder 14 comprises piston 48, measurement device stage 40 providing interfaces for cooling, data and energy, dumper 45 for dumping the energy of laser beam 6, gaskets 44 for ensuring the gas tightness when measurement cylinder 14 is linked to build chamber 5, a device for beam profiling 26 comprising a camera 53, and a motorized stage 32.

Laser beam 6 is directed at measurement device 15, in particular a device for beam profiling 26, and captured by a camera 53 inside device for beam profiling 26 and the beam caustics are measured. The measurement may take place at different points of time during the process chain. The beam profiling may comprise spot checks and/or caustic check including the elaboration with a computer and is also suitable for measuring the focus shift of at least one laser beam generating unit 2. The laser light may also be dumped using dumper 45 which may be attached to beam profiling device 26.

It may be advantageous to profile laser beam 6 directly under its laser beam generating unit 2. In Fig. 13, device for beam profiling 26 is placed on motorized stage 32 that is rotatable and can be moved to pre-defined measurement positions 54 by motor 55. This is advantageous for calibrating multi-laser manufacturing devices 1 as all laser beam generating units 2 may be calibrated using the same device for beam profiling 26 if laser beam generating units 2 are arranged in a circle. For other arrangements, motorized stage 32 may also be tiltable and/or translationally movable (cf. Fig. 16, 17). Measuring the beam profile at other positions than directly under laser beam generating unit 2 may also be advantageous for gaining information about the characteristics of laser beam 6 in the entire scan field 28.

To save time, it is also possible to place multiple devices for beam profiling 26 in the same measurement cylinder 14 and/or to combine the beam profiling with other measurement processes.

Data and power supply 47 provides the data paths and energy needed by measurement device 15 and motorized stage 32 via cables connected to control units 33 and an electric power interface of manufacturing device 1.

The laser energy may also be dumped using dumper 45. The cooling of dumper 45 is provided by cooling water supply 46. The cooling fluid may also be an oil or another fluid with advantageous temperature characteristics. Also, a fan may be used for cooling. If no laser energy has to be dumped, dumper 45 will be obsolete.

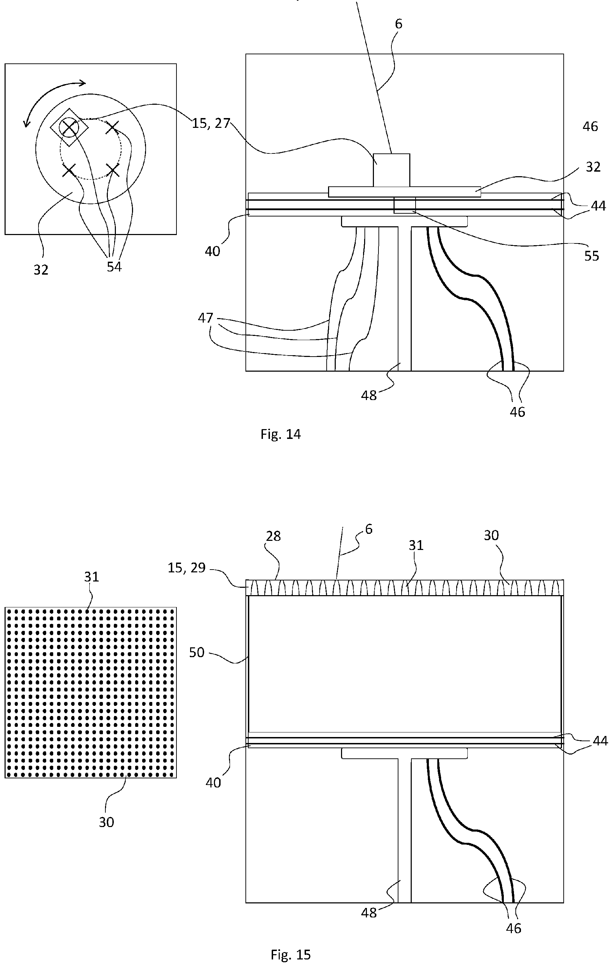

As can be inferred from **Fig. 14****,** laser beam generating units 2 may be calibrated by measuring the laser power by using a laser power meter 27 as measurement device 15.

Laser beam 6 is directed onto laser power meter 27 that comprises components to measure the laser power, for example an absorber head. Measurement device 15 may work analogue or digital. For an automated calibration, a digital measurement is advantageous. Laser power meter 27 may have multiple absorber heads or may be able to switch between different absorber heads.

Laser power meter 27 may be positioned in the middle of the measurement device stage 40 providing interfaces for cooling, data and energy and the laser beams 6 of a multi-laser manufacturing device 1 are all directed into it or it may be placed on a tiltable, translationally moving and/or rotatable motorized stage 32 to move laser power meter 27 to a for a measurement advantageous position.

To save time it is also possible to place multiple laser power meters 27 in the same measurement cylinder 14 and/or to combine the laser power measurement with other measurement processes.

The power meter needs cooling that may be supplied by cooling water supply 46 or by a fan using energy provided by data and power supply 47.

**Fig. 15** shows a schematic view of measurement cylinder 14 arranged for a scan field calibration of manufacturing device 1.

Scan field 28 is the area in which laser beam 6 is directed during the build process. The calibration of scan field 28 is crucial for building individual three-dimensional objects 10 with a good build quality and calibrating the individual scan fields 28 of multiple laser beam generating units 2 is crucial for building three-dimensional objects 10, as a proper calibration prevents relative misalignments of laser beam generating units 2 and subsequently non-aligning contours of three-dimensional objects 10.

Measurement device 15 is a scan field calibrator 29 comprising a scan field plate 30 which is a massive, mostly thick plate with a plurality of bores 31 on a spacer 50 which ensures a defined distance between scan field plate 30 and measurement device stage 40.

The positions of bores 31 are known with high accuracy by previous measurements. Laser beams 6 are scanned on each bore and the returned radiation is captured, for example by a camera or a photodiode, and used to compute the position of bores 31 in each laser's frame of reference. Knowing the position of each bore 31, a scan field calibration can be performed.

A camera is often already installed in manufacturing devices 1. In this case, no additional electric or electronic connections are needed, only cooling fluid may be provided by cooling water supply 46 to keep scan field plate 30 at a controlled temperature. In another implementation, cooling and heating, for example resistive heating, could be integrated with thermocouples to regulate the temperature of scan field plate 30 and to perform the measurement and calibration of manufacturing device 1 always at the same temperature. Cooling with a fan is also possible. If the induced laser energy is not too high, for example because of short calibration times the cooling of scan field calibrator 29 may be obsolete.

Alternatively, scan field plate 30, in particular designed without bores 31, is irradiated by laser beams 6, a pattern is created and the created pattern is recorded by a camera already installed in manufacturing device 1 to use the deviation between the measured scan field 28 and the target scan field 28 for a scan field calibration.

Furthermore, scan field plate 30 with or without bores 31 may be used to calibrate the monitoring of building material 7, in particular measurement devices 15 used for the monitoring of building material 7, when building material 7 is spread over opening 11, and/or for a three-dime. By executing the calibration of the monitoring of building material 7 and the scan field calibration at the same time, the calibration error may be minimized.

Additionally, scan field plate 30 may be used to a three-dimensional calibration of measurement devices 15, in particular cameras, installed in manufacturing device 1. This calibration may also be executed simultaneously with the calibration of the monitoring of building material 7 described above. For these simultaneous calibrations a scan field plate 30 especially designed for executing both calibrations at the same time or a scan field plate 30 with or without bores 31 as described above may be used.

**Fig. 16** shows a schematic view of measurement device 15 arranged for measuring the laser power, in particular a laser power meter 27, placed on motorized stage 32 that is tiltable for calibrating manufacturing device 1.

For some measurements, for example beam profiling or laser power measurements, it may be advantageous for laser beam 6 to be perpendicular or in another specific incidence angle 57 to the upper surface of measurement device 15. To provide a way for arranging a specific incidence angle 57 measurement device 15 may be placed on motorized stage 32 that is tilted by attached tilting devices 56.

Fig. 16 shows an arrangement in which tilting devices 56 are able to tilt motorized stage 32 in any desired direction to set the desired incidence angle 57 between laser beam 6 and laser power meter 27. By using a tiltable motorized stage 32, measurement device 15 may not have to be positioned directly under their respective laser beam generating unit 2.

Other possible implementations are the components of measurement device 15 to be tiltable inside the hull of measurement device 15 to arrange a specific incidence angle 57 between laser beam 6 and the measurement components of measurement device 15 to be tiltable or the tiltable motorized stage 32 to be measurement device stage 40 itself.

Cooling fluid, power and data may be supplied by data and power supply 47 and cooling water supply 46. The supplies should be flexible and/or extendable to prevent failures.

As can be inferred from **Fig. 17****,** measurement device 15 may be placed on a translationally moving motorized stage 32 to calibrate manufacturing device 1.

Using a translationally moving motorized stage 32 may be advantageous to move measurement device 15 into specific positions, for example directly under laser generating units 2 and especially for arrangements in which laser beam generating units 2 of a multi-laser manufacturing device 1 are not arranged in a circular way.

The translational movement is carried out by using a gear rack 59 integrated into motorized stage 32 and motor 55 with a gear 58 for driving gear rack 59. Other possible implementations for generating the translational movement are for example a linear motor like a magnetic linear motor or a stepper motor, a hydraulic actuator, or a lead screw motor.

The translational movement may not only be one-dimensional but also two- or three-dimensional. The horizontal movement of motorized stage 32 may also be combined with the vertical movement of piston 48 and/or rotary movement as shown in Fig. 13, 14 and/or a tilting movement as shown in Fig. 16. While moving vertically, the gas tightness is still ensured by gaskets 44 using their flexibility. Minor translational horizontal movement may also be performed by moving measurement device stage 40.

Cooling fluid, power and data may be supplied by data and power supply 47 and cooling water supply 46. The supplies should be flexible and/or extendable to prevent failures and may also be used for motorized stage 32.

As can be inferred from **Fig. 18****,** the adjustments of manufacturing device 1 can be controlled by a control unit 33.

The adjustment for the calibration of manufacturing device 1 may be done manually on basis of the taken measurements, but with regard to automation of the manufacturing process an automated calibration is advantageous.

The information generated by the measurements with measurement cylinder 14 are passed on by data and power supply 47 to control unit 33. Control unit 33 provides commands to adjust parts of manufacturing device 1, for example optical components 52 and their actuators for adjusting laser beam 6 and/or gas inlet 36 and gas outlet 37 and their respective inlet valve 60 and outlet valve 61 for adjusting gas flow 22.

Control unit 33 may be centralized in manufacturing device 1 or measurement cylinder 14, or decentralized. A decentralization may be realized by measurement cylinder 14 providing parts of control unit 33 for specific calibrations and/or a connection to a network. A connection to a network is also advantageous for an automated provision of measurement cylinder 14 and build cylinder 12.

In addition to this, control unit 33 may also call for an interaction by a human operator if means are necessary that cannot be done by manufacturing device 1 on its own. Furthermore, it is advantageous to use control unit 33 also for the control of the build processes and their sub-processes, for example for the control of recoating unit 8. Also, reports may be generated for example for research regarding correlations between laser beam characteristics and the build quality of three-dimensional objects 10.

Control unit 33 may not only adjust elements of manufacturing device 1, but may also call for clean-ups of parts, for example f-theta lens 62, and/or repairs. Additionally, it may provide software elements for scheduling calibration processes, in particular on a machine-learning basis using the results of the measurements of the directly connected manufacturing device 1 and/or other manufacturing devices 1.

Furthermore, control unit 33 may use the input of measurement devices 15 that are not placed in measurement cylinder 14 but are permanently installed in manufacturing device 1. Also, additional input by a human operator via a human-machine-interface is possible.

**Fig. 19** and **Fig. 20** show schematic views of an aligning system 35 and a guiding system 34 for the precise positioning of measurement cylinder 14 or build cylinder 12.

Elevating device 39 of manufacturing device 1 provides an aligning system 35. When elevating device 39 and build cylinder 12 are connected, the precise relative positioning of build cylinder 12 is crucial for the gas tightness of build chamber 5 and the build quality of three-dimensional objects 10.

Aligning system 35 comprises a ball-spring-mechanism consisting of aligning springs 64 and aligning balls 63 that are pushed out into aligning grooves 67 inside build cylinder 12. When elevating device 39 is pushed into build cylinder 12 aligning balls 63 of aligning system 35 are pushed back into aligning system 35 and are pushed out by aligning springs 64 when they reach the height of aligning grooves 67 to create a form fit. By using aligning springs 64 with similar spring rates, aligning deviations are evened-out. Furthermore, aligning system 35 may also be used to even-out inclinations.

Aligning system 35 may also be realized by other mechanical or magnetic aligning system and/or using mechanical sensorics and/or optical sensorics for determining the exact relative position of elevating device 39 and build cylinder 12 and adjusting the relative position with a control system and powered units.

The determination of the rough position of build cylinder 12 may be ensured by using guiding system 34. Guiding system 34 shown in Fig. 20 shows a system that aligns build cylinder 12 on conveying device 16 using funnel-shaped guide rails. The system could also comprise a sensor-actuator mechanism which measures the position of build cylinder 12 and moves build cylinder 12 to the correct position on conveying device 16. The correct positioning in the direction of the movement of conveying device 16 may be ensured by a mechanical stop and/or a sensor-actuator mechanism correcting the position of build cylinder 12 and/or sensorics that stop the movement of conveying device 16. Additionally, an aligning system 35 as shown in Fig. 19 may be used.

The described procedures may also be applied to measurement cylinder 14. Elevating device 39 may either be connected directly to substrate plate 13 or measurement device stage 40, or to second sealing lid 18 closing the bottom of measurement cylinder 14 or build cylinder 12, or to a fixed bottom of measurement cylinder 14 or build cylinder 12. If measurement cylinder 14 has a fixed bottom, an additional piston 48 moving measurement device stage 40 and/or substrate plate 13 is necessary.

As can be inferred from **Fig. 21****,** building material 7 that remains in build cylinder 12 after the build of three-dimensional objects 10 may be removed by a building material removal device 65.

Fig. 21 shows the removal of building material 7 by connecting building material removal pipes 66 to build cylinder 12. Building material 7 is sucked through the building material removal pipes 66 by the suction of building material removal device 65 which is in this case arranged like a vacuum cleaner. To prevent creating harmful negative pressure in build cylinder 12 when it is separated from build chamber 5 by first sealing lid 17, first sealing lid 17 may be semipermeable and/or or not all building material removal pipes 66 may be used for suction but also for providing additional gas. Also, during the removal of building material 7 build cylinder 12 may not be separated from build chamber 5 and its gas inlet 36 and gas outlet 37.

The removal may also be performed after build cylinder 12 is removed from manufacturing device 1 and/or by using building material removal device 65 that may be freely positioned inside build cylinder 12, for example by using a robot that positions a building material removal pipe 66. Building material 7 may also be removed by using positive gas pressure, mechanical material removal devices 65 like brushes and/or tipping build cylinder 12. Building material removal device 65 may also be used for removing remains of building material 7 from measurement cylinders 14 after measurements.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

Although the preferred embodiments of this invention have been described herein, improvements and modifications may be incorporated without departing from the scope of the following claims.

### List of reference signs

- 1: manufacturing device
- 2; 2a, 2b: laser beam generating unit
- 3; 3a, 3b: laser
- 4; 4a, 4b: scanning unit
- 5: build chamber
- 6; 6a, 6b: laser beam
- 7: building material
- 8: recoating unit
- 9: recoating lip
- 10; 10a, 10b: three-dimensional object
- 11: opening
- 12; 12a, 12b, 12c, 12d: build cylinder
- 13; 13a: substrate plate
- 14; 14a, 14b: measurement cylinder
- 15; 15a, 15b: measurement device
- 16: conveying device
- 17: first sealing lid
- 18: second sealing lid
- 19: service cylinder
- 20: maintenance and repair device
- 21: exchange part
- 22: gas flow
- 23: gas flow meter
- 24: opaque plate
- 25: pattern
- 26: device for beam profiling
- 27: laser power meter
- 28: scan field
- 29: scan field calibrator
- 30: scan field plate
- 31: bore
- 32: motorized stage
- 33: control unit
- 34: guiding system
- 35: aligning system
- 36: gas inlet
- 37: gas outlet
- 38: storage compartment
- 39: elevating device
- 40: measurement device stage
- 41: heating device
- 42: heating control
- 43: temperature curve
- 44: gasket
- 45: dumper
- 46: cooling water supply
- 47: data and power supply
- 48: piston
- 49: dumper path
- 50: spacer
- 52: optical component
- 53: camera
- 54: measurement position
- 55: motor
- 56: tilting device
- 57: incidence angle
- 58: gear
- 59: gear rack
- 60: inlet valve
- 61: outlet valve
- 62: f-theta lens
- 63: aligning ball
- 64: aligning spring
- 65: building material removal device
- 66: building material removal pipe
- 67: aligning grooves

## Claims

1. A method of calibrating a manufacturing device (1) for additively manufacturing a three-dimensional object (10; 10a, 10b) by applying layers of a building material (7), preferably a powder, and selectively solidifying the building material (7) with at least one laser beam (6; 6a, 6b), wherein the manufacturing device (1) comprises:
at least one laser beam generating unit (2; 2a, 2b) for directing the at least one laser beam (6a, 6b) on the building material (7),
a build chamber (5), which comprises an opening (11) in the lower surface and is configured to keep an inert atmosphere at least while the manufacturing device (1) is manufacturing the three-dimensional object (10; 10a, 10b),
a build cylinder (12; 12a, 12b, 12c, 12d), which is configured to be arranged underneath the build chamber (5) and at least temporarily linked to the build chamber (5) by positioning it at the opening (11) of the build chamber (5), wherein the build cylinder (12; 12a, 12b, 12c, 12d) comprises a vertically movable substrate plate (13), and
a measurement cylinder (14; 14a, 14b), which is configured to be arranged underneath the build chamber (5) and at least temporarily linked to the build chamber (5) by positioning it at the opening (11) of the build chamber (5),
wherein the method comprises the following steps:
a.) placing the build cylinder (12; 12a, 12b, 12c, 12d) or the measurement cylinder (14; 14a, 14b) at the opening (11) of the build chamber (5),
b.) building a three-dimensional object (10; 10a, 10b) inside the build cylinder (12; 12a, 12b, 12c, 12d) and
c.) calibrating the manufacturing device (1) with the measurement cylinder (14; 14a, 14b) containing a measurement device (15; 15a, 15b) before and/or after building the three-dimensional object (10; 10a, 10b).

2. The method according to claim 1, wherein the build cylinder (12; 12a, 12b, 12c, 12d) and/or the measurement cylinder (14; 14a, 14b) are conveyed at least nearby the opening (11) of the build chamber (5) by a conveying device (16), such as an elevator, a conveyor belt, an automated guided vehicle, a robot or a rail system.

3. The method according to any of the preceding claims, wherein the inert atmosphere inside the build chamber (5) is assured by a first sealing lid (17) closing the build chamber (5) after the build of the three-dimensional object (10; 10a, 10b) or after the calibration of the manufacturing device (1).

4. The method according to any of the preceding claims, wherein the build cylinder (12; 12a, 12b, 12c, 12d) or the measurement cylinder (14; 14a, 14b) is sealed with a second sealing lid (18) after the build of the three-dimensional object (10; 10a, 10b) or the calibration, respectively.

5. The method according to any of the preceding claims, wherein a service cylinder (19) provides at least one device for the maintenance and/or the repair of the manufacturing device (20) and/or at least one exchange part (21) for the repair of the manufacturing device (1).

6. The method according to any of the preceding claims, wherein the substrate plate (13) inside the build cylinder (12; 12a, 12b, 12c, 12d) is preheated before and/or while mounting the build cylinder (12; 12a, 12b, 12c, 12d) at the opening (11) to the build chamber (5).

7. The method according to any of the preceding claims, wherein the measurement device (15; 15a, 15b) is stored in a storage compartment (38) inside the build chamber (5).

8. The method according to any of the preceding claims, wherein the gas flow (22) inside the build chamber (5) is measured by the measurement device (15; 15a, 15b), in particular with a gas flow meter (23).

9. The method according to any of the preceding claims, wherein the focus shift is measured by the measurement device (15; 15a, 15b), in particular by directing the laser beam (6; 6a, 6b) at an opaque plate (24) and analyzing the patterns (25) created by the laser beam (6; 6a, 6b) on the opaque plate (24) at multiple points in time.

10. The method according to any of the preceding claims, wherein the laser beam caustic and/or laser beam power are measured by the measurement device (15; 15a, 15b), in particular with a device for beam profiling (26) and/or a laser power meter (27).

11. The method according to any of the preceding claims, wherein a scan field (28) is calibrated by the measurement device (15; 15a, 15b), in particular with a scan field calibrator (29) containing a scan field plate (30) with multiple bores (31).

12. The method according to any of the preceding claims, wherein the measurement device (15; 15a, 15b) is mounted on a moving translationally and/or rotating and/or tilting motorized stage (32) on or in the measurement cylinder (14; 14a, 14b).

13. The method according to any of the preceding claims, wherein a guiding system (34) and/or an aligning system (35) moves the build cylinder (12; 12a, 12b, 12c, 12d) or the measurement cylinder (14; 14a, 14b) precisely to the opening (11) to the build chamber (5).

14. The method according to any of the preceding claims, wherein the unsolidified building material (7) is automatically removed from the build cylinder (12; 12a, 12b, 12c, 12d) or the measurement cylinder (14; 14a, 14b) before or after the removal of the build cylinder (12; 12a, 12b, 12c, 12d) or the measurement cylinder (14; 14a, 14b) from the opening (11) of the build chamber (5).

15. A manufacturing device (1) for additively manufacturing a three-dimensional object (10; 10a, 10b) by applying layers of a building material (7), preferably a powder, and selectively solidifying the building material (7) with at least one laser beam (6; 6a, 6b), wherein the manufacturing device (1) comprises:
at least one laser beam generating unit (2; 2a, 2b) for directing the at least one laser beam (6a, 6b) on the building material (7),
a build chamber (5), which comprises an opening (11) in the lower surface and is configured to keep an inert atmosphere at least while the manufacturing device (1) is manufacturing the three-dimensional object (10; 10a, 10b),
a build cylinder (12; 12a, 12b, 12c, 12d), which is configured to be arranged underneath the build chamber (5) and at least temporarily linked to the build chamber (5) by positioning it at the opening (11) of the build chamber (5), wherein the build cylinder (12; 12a, 12b, 12c, 12d) comprises a vertically movable substrate plate (13),
a measurement cylinder (14; 14a, 14b), which is configured to be arranged underneath the build chamber (5) and at least temporarily linked to the build chamber (5) by positioning it at the opening (11) of the build chamber (5), and
a control unit (33), which is configured to perform a method according to any of the preceding claims.
